(19) Europäisches Patentamt / European Patent Office / Office européen des brevets

(11) **EP 3 028 534 B1**

(12) **EUROPÄISCHE PATENTSCHRIFT**

(45) Veröffentlichungstag und Bekanntmachung des Hinweises auf die Patenterteilung:
**15.12.2021 Patentblatt 2021/50**

(51) Int Cl.:
*H05B 3/14* (2006.01)    *H05B 3/86* (2006.01)
*B32B 17/10* (2006.01)

(21) Anmeldenummer: **14725171.4**

(22) Anmeldetag: **20.05.2014**

(86) Internationale Anmeldenummer:
**PCT/EP2014/060314**

(87) Internationale Veröffentlichungsnummer:
**WO 2015/014511 (05.02.2015 Gazette 2015/05)**

(54) **BEHEIZBARE LAMINIERTE SEITENSCHEIBE**

HEATABLE LAMINATED SIDE WINDOW

VITRE LATÉRALE LAMINÉE POUVANT ÊTRE CHAUFFÉE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **31.07.2013 EP 13178680**

(43) Veröffentlichungstag der Anmeldung:
**08.06.2016 Patentblatt 2016/23**

(73) Patentinhaber: **SAINT-GOBAIN GLASS FRANCE**
**92400 Courbevoie (FR)**

(72) Erfinder:
• **KLEIN, Marcel**
**52499 Baesweiler (DE)**
• **HERMANGE, Francois**
**52074 Aachen (DE)**

(74) Vertreter: **Gebauer, Dieter Edmund**
**Splanemann**
**Patentanwälte Partnerschaft**
**Rumfordstraße 7**
**80469 München (DE)**

(56) Entgegenhaltungen:
**WO-A1-2007/039747**    **WO-A1-2012/004280**
**WO-A2-2010/049431**    **DE-A1-102004 029 164**
**US-A- 2 878 357**

**Beschreibung**

Die Erfindung betrifft eine beheizbare laminierte Seitenscheibe, ein Verfahren zu deren Herstellung und deren Verwendung.

Scheiben im Automobilbereich, welche mittels einer transparenten, elektrisch leitfähigen Beschichtung beheizbar sind, sind dem Fachmann hinlänglich bekannt. Die Beschichtungen umfassen dabei elektrisch leitfähige Schichten, insbesondere auf Silberbasis. Die Beschichtungen sind üblicherweise mit zwei Stromsammelschienen (auch Sammelleiter oder Busbars genannt) elektrisch kontaktiert, zwischen denen ein Strom durch die beheizbare Beschichtung fließt. Diese Art der Beheizung ist insbesondere für Windschutzscheiben beschrieben worden, wo die Stromsammelschienen an der oberen und unteren Kante parallel zueinander angeordnet werden können. Zwischen den parallelen Stromsammelschienen bildet sich ein homogenes Heizfeld aus.

Die Beheizung mittels leitfähiger Beschichtungen ist auch für Seitenscheiben interessant. Aufgrund deren komplexer Form ist es aber nicht möglich, die Stromsammelschienen parallel zueinander so anzuordnen, dass sich ein homogenes Heizfeld im Durchsichtbereich der Scheibe ausbildet. Zudem ist es insbesondere bei Scheiben für Seitenfenster, die sich durch Vertikalverschiebung der Scheibe öffnen lassen, wünschenswert, dass die Stromsammelschienen auch im geöffneten Zustand von Karosserieteilen verdeckt sind, was zusätzlich Einschränkungen hinsichtlich der Positionierung der Stromsammelschienen mit sich bringt.

Um die Strompfade zwischen den Stromsammelschienen über den Durchsichtbereich der Scheibe zu leiten, ist es üblich, die Beschichtung mittels linienförmiger, entschichteter Bereiche zu strukturieren. Seitenscheiben mit strukturierter leitfähiger Beschichtung sind beispielsweise aus DE 10 2004 029 164 A1, WO 03/105532 A1, WO 03/105533 A1 und WO 2006010698 A1 bekannt. Dadurch, dass die unterschiedlichen Strompfade zwischen den Stromsammelschienen durch die vorgeschlagenen Ausgestaltungen der Strukturierung sehr unterschiedlich sind, bilden sich allerdings Bereiche mit sehr unterschiedlicher Temperatur und damit Heizwirkung aus. Zudem führen die entschichteten Linien häufig zu lokalen Überhitzungen, sogenannten "Hot Spots", an Stellen, an denen sich die Richtung des Strompfades stark ändert, insbesondere Ecken oder offenen Enden der Linien.

US 2878357 zeigt eine beheizbare Verbundscheibe, welche eine in Segmenten aufgeteilte Heizschicht aufweist. Entlang der Scheibenkante sind die einzelnen Segmente durch Stromsammelschienen und elektrische Leiter seriell verbunden.

EP 2 345 303 B1 betrifft eine beheizbare Fahrzeugscheibe, wobei die Heizelemente durch eine leitende Druckpaste ausgebildet sind.

US 2878357 zeigt eine beheizbare Verbundscheibe, welche eine in Segmente aufgeteilte Heizschicht aufweist. Entlang der Scheibenkante sind die einzelnen Segmente durch Stromsammelschienen und elektrische Leiter seriell verbunden.

EP 2 345 303 B1 zeigt eine beheizbare Fahrzeugscheibe, bei welcher die Heizelemente durch eine leitende Druckpaste ausgebildet sind.

WO 2012/004280 A1 zeigt eine beheizbare Fahrzeugscheibe, bei welcher eine Heizschicht durch Einschnitte in Segmente unterteilt ist, welche durch Verbindungselemente seriell miteinander verbunden sind, so dass sich ein einziger Heizstreifen ergibt.

Der vorliegenden Erfindung liegt die Aufgabe zugrunde, eine verbesserte beheizbare Seitenscheibe mit homogener Heizwirkung bereitzustellen.

Die Aufgabe der vorliegenden Erfindung wird erfindungsgemäß durch eine beheizbare laminierte Seitenscheibe gemäß Anspruch 1 gelöst. Bevorzugte Ausführungen gehen aus den Unteransprüchen hervor.

Das erfindungsgemäße beheizbare laminierte Seitenscheibe umfasst mindestens eine Außenscheibe und eine Innenscheibe, welche über eine thermoplastische Zwischenschicht miteinander verbunden sind, und eine flächenmäßig zwischen der Außenscheibe und der Innenscheibe angeordnete elektrisch leitfähige Beschichtung, welche durch Isolierungslinien in Segmente aufgeteilt ist, wobei

- die Beschichtung zwischen einer ersten Stromsammelschiene und einer zweiten Stromsammelschiene verlaufende und jeweils zumindest ein Segment enthaltende Heizstreifen aufweist, welche durch die Isolierungslinien elektrisch voneinander isoliert sind,
- zumindest ein Heizstreifen durch mindestens zwei Segmente gebildet wird, welche über mindestens ein elektrisch leitfähiges Verbindungselement seriell elektrisch leitend miteinander verbunden sind.

Die Länge jedes einzelnen Heizstreifens weicht um höchstens 15 % von der mittleren Länge der Heizstreifen ab.

Die erfindungsgemäße laminierte Seitenscheibe ist die Seitenscheibe eines Fahrzeugs, bevorzugt eines Kraftfahrzeugs, beispielsweise eines Personenkraftwagens oder eines Lastkraftwagens. Die laminierte Seitenscheibe umfasst eine Innenscheibe und eine Außenscheibe. Mit Innenscheibe wird dabei diejenige Scheibe bezeichnet, welche in Einbaulage dem Innenraum des Fahrzeugs zugewandt ist. Mit Außenscheibe wird diejenige Scheibe bezeichnet, welche in Einbaulage der äußeren Umgebung des Fahrzeugs zugewandt ist. Zwischen der Außenscheibe und der Innenscheibe ist erfindungsgemäß eine elektrisch leitfähige Beschichtung angeordnet. Die Heizschicht ist mit einer ersten und einer zweiten Stromsammelschiene verbunden. Die Stromsammelschienen sind dafür vorgesehen, mit einer externen Spannungsquelle verbunden zu werden, so dass ein Strom zwischen den Sammelschienen durch die leitfähige Beschichtung fließt. Die Beschichtung fungiert so als Heizschicht und beheizt die Seitenscheibe infolge ihres elektrischen Widerstandes, beispielsweise um die Seitenscheibe zu enteisen oder von Feuchtigkeitsbeschlag zu befreien. Die Heizschicht kann auf einer Oberfläche der

Innenscheibe oder der Außenscheibe aufgebracht sein oder auf einer Folie der Zwischenschicht.

Die elektrische leitfähige Beschichtung ist durch die Isolierungslinien in verschiedene, voneinander getrennte Segmente unterteilt. Diese Segmente ermöglichen es, den Pfad des Stromflusses zwischen der ersten Stromsammelschiene und der zweiten Stromsammelschiene gezielt zu formen, was aufgrund der komplexen Formen üblicher Seitenscheiben zur Gewährleistung einer homogenen Stromverteilung und damit Heizwirkung notwendig ist.

Der Erfindung liegt die Erkenntnis zugrunde, dass zur Homogenisierung der Heizwirkung nicht der Widerstand der Heizstreifen (angegeben in der Einheit Ohm) heranzuziehen ist, sondern die Flächenleistungsdichte (angegeben in der Einheit W/m$^2$) beziehungsweise die Flächenstromdichte (angegeben in der Einheit A/m$^2$).

Der Widerstand R (in der Einheit $\Omega$) eines Heizstreifens ergibt sich aus

$$R = \frac{\rho \cdot L}{d \cdot B}, \qquad\qquad (1)$$

wobei p den spezifischen elektrischen Widerstand (Einheit $\Omega$m), L die Länge des Heizstreifens (Einheit m), d die Dicke des Heizstreifens, also die Dicke der elektrisch leitfähigen Beschichtung (Einheit m) und B die Breite des Heizstreifens (Einheit m) kennzeichnet.

Wäre die Temperatur der Heizstreifen direkt vom Wert des Widerstands abhängig, so ließe sie sich gemäß Formel (1) bei gegebener beheizbarer Beschichtung einerseits durch die Länge L und andererseits durch die Breite B des Heizstreifens beeinflussen. Stattdessen haben die Erfinder überraschend festgestellt, dass die Temperatur alleine durch die Wahl der Länge L zu beeinflussen ist, wohingegen die Breite B keine Rolle spielt. Der Grund hierfür ist, dass die Temperatur des Heizstreifens von der Flächenleistungsdichte $P_S$ abhängt.

Die Flächenleistungsdichte ist dabei die Leistung P geteilt durch die Fläche (Oberfläche) S des Heizstreifens, also

$$P_S = \frac{P}{S} = \frac{U \cdot I}{S}, \qquad\qquad (2)$$

wobei U die Spannung (Einheit W) und / die Stromstärke (Einheit A) bezeichnet und die bekannte Beziehung $P=UI$ verwendet wurde. Unter Verwendung des Ohm'schen Gesetzes ($U=RI$) sowie Formel (1) ergibt sich daraus

$$P_S = \frac{U^2}{S \cdot R} = \frac{U^2 \cdot d \cdot B}{S \cdot \rho \cdot L}. \qquad\qquad (3)$$

Da die Fläche S das Produkt aus Breite B und Länge L des Heizstreifens ergibt *(S=B L)*, ergibt sich

$$P_S = \frac{U^2 \cdot d \cdot B}{B \cdot L \cdot \rho \cdot L} = \frac{U^2 \cdot d}{\rho \cdot L^2}. \qquad\qquad (4)$$

Die Flächenleistungsdichte $P_S$ ist also unabhängig von der Breite B des Heizstreifens, sondern ist bei gegebener Spannung U, Schichtdicke d und spezifischem Widerstand p lediglich von der Länge *L* des Heizstreifens abhängig. Die Erfinder haben nun herausgefunden, dass die Temperatur der Heizstreifen durch die Flächenleistungsdichte $P_S$ und damit bei gegebener beheizbarer Beschichtung und (im Fahrzeugbereich üblicherweise vorgegebener) Spannung lediglich durch die Länge *L* zu beeinflussen ist.

Bei einer einfachen rechteckigen Scheibe, bei denen die Stromsammelschienen an zwei gegenüberliegenden Seitenkanten parallel zueinander angeordnet sind, liegen Strompfade gleicher Länge vor, woraus sich eine homogene Heizleistung ergibt. Bei Seitenscheiben stellt die homogene Heizleistung jedoch eine große Herausforderung dar aufgrund der komplexen, von einem Rechteck stark abweichenden Form der Scheibe. Erfindungsgemäß wird die beheizbare Beschichtung durch Isolierungslinien in Segmente aufgeteilt, um den Strom über die gesamte Scheibe verteilt von der ersten zur zweiten Stromsammelschiene zu leiten und somit eine Heizwirkung auf der gesamten Scheibe zu erreichen. Hierbei ergeben sich allerdings Segmente unterschiedlicher Länge. Um dennoch Strompfade mit gleicher (oder ähnlicher) Länge zu erreichen, werden mehrere Segmente über elektrische Verbindungselemente zu Heizstreifen verbunden. Die Segmente sind erfindungsgemäß so ausgestaltet und miteinander verbunden, dass die Länge jedes einzelnen Heizstreifens um höchstens 15 % von der mittleren Länge der Heizstreifen abweicht, also dass alle Heizstreifen eine ähnliche Länge haben.

Unter der mittleren Länge der Heizstreifen ist dabei das arithmetische Mittel der Heizstreifenlängen zu verstehen, also die Summe der Längen aller Heizstreifen geteilt durch die Anzahl der Heizstreifen.

Die Länge jedes einzelnen Heizstreifens weicht bevorzugt um höchstens 10 %, besonders bevorzugt um höchstens 5% von der mittleren Länge der Heizstreifen ab. Das ist besonders vorteilhaft im Hinblick auf eine homogene Heizwirkung.

Die Länge eines Heizstreifens wird dabei in der Mitte des Heizstreifens gemessen. Das bedeutet, dass die gemessene Strecke in der Mitte des Heizstreifens angeordnet ist, wobei der seitliche Abstand zu den beiden Isolierungslinien, welche den Heizstreifen begrenzen, gleich ist.

Es ist auch möglich, dass das Prinzip der ähnlich langen Heizstreifen, welche zu einer homogenen Heizleistung führen, nur auf einen Bereich der Scheibe angewandt wird. Dies ist dann interessant, wenn ein Bereich der Scheibe mit einer deutlich höheren oder niedrigeren Heizleistung versehen werden soll als die übrige Scheibe. Dann kann dieser Bereich von der erfindungsgemäßen Gestaltung der Heizstreifen ausgenommen werden. Beispielsweise kann es gewünscht sein, dass eine Seitenscheibe im vorderen Bereich eine deutlich höhere Heizleistung als im restliche Bereich aufweisen soll, damit für den Fahrer möglichst schnell und effektiv der Blick auf die Seitenspiegel freigegeben wird. Dann kann der Großteil der Scheibenfläche mit den erfindungsgemäß gestalteten Heizstreifen versehen werden, welche eine gleichmäßige Heizwirkung gewährleisten, während im vorderen Bereich durch geeignete Ausbildung der Segmente und Heizstreifen bewusst eine höhere Heizleistung erreicht wird.

Die Segmente sind bevorzugt streifenförmig ausgebildet. Unter einem Streifen wird dabei eine Form verstanden, deren Länge mindestens doppelt so groß ist wie ihre Breite. Die Breite ist dabei im Sinne der Erfindung diejenige Dimension, entlang derer die Segmente mit der Stromsammelschiene verbunden sind. Die Länge ist diejenige Dimension, entlang derer sich der Strompfad erstreckt.

Wie vorstehend ausgeführt hat die Breite der Segmente und damit der Heizstreifen keinen Einfluss auf die Temperaturverteilung auf der Scheibe. Die Isolierungslinien können jedoch einen Einfluss auf das Erscheinungsbild der Scheibe haben. Aus ästhetischen Gründen sind unauffällige Isolierungslinien erwünscht, was zu einem harmonischen und wenig störenden Erscheinungsbild führt. Alle Segmente weisen daher bevorzugt die gleiche Breite auf. Die Isolierungslinien sind dann vorteilhaft gleichmäßig und unauffällig über die Scheibe verteilt. Die Scheibe sollte einerseits nicht zu viele Isolierungslinien aufweisen, weil dadurch das Erscheinungsbild gestört wird. Zudem machen viele Isolierungslinien und entsprechend viele Segmente eine große Anzahl von Verbindungselementen notwendig, die sich ab einer gewissen Zahl nur noch schwer vor dem Betrachter verstecken lassen. Andererseits sollte die Scheibe auch nicht zu wenige Isolierungslinien aufweisen, um das Zusammenschalten der Segmente zu Heizstreifen gleicher Länge zu ermöglichen. Die genaue Anzahl und Breite der Segmente hängt im Einzelfall von der genauen Form der Scheibe ab und kann vom Fachmann durch Vorüberlegungen und Simulationen bestimmt werden. Die Breite der Segmente ist auch abhängig von der Größe der Seitenscheibe. Üblicherweise werden bei Seitenscheiben für Personenkraftwagen besonders gute Ergebnisse erzielt, wenn die Breite der Segmente von 1 cm bis 10 cm, bevorzugt von 2 cm bis 6 cm beträgt. Für größere Seitenscheiben, beispielsweise von Lastkraftwagen, können aber auch deutlich größere Breiten gewählt werden, beispielsweise von 5 cm bis 30 cm. Die Anzahl der Segmente ist prinzipiell größer oder gleich 3 und beträgt bevorzugt von 5 bis 15.

Die Anzahl der Heizstreifen ist prinzipiell größer oder gleich 2 und beträgt bevorzugt von 3 bis 10, besonders bevorzugt von 4 bis 7. Das ist besonders vorteilhaft im Hinblick auf eine homogene Heizleistung, eine optisch ansprechende Scheibe und eine einfache Herstellung. Alle Heizstreifen können durch seriell miteinander verbundene Segmente gebildet sein. Es können aber auch Heizstreifen vorliegen, die lediglich ein einziges Segment umfassen. Jede Gruppe von miteinander verbundenen Segmenten, die einen Heizstreifen ausbilden, besteht bevorzugt aus zwei Segmenten, die durch ein elektrisch leitfähiges Verbindungselement seriell verbunden sind. Jeder Heizstreifen wird dann durch ein oder zwei Segmente gebildet. Das ist vorteilhaft im Hinblick auf eine einfache Herstellung der Scheibe. Die Gruppen können prinzipiell aber auch aus mehr als zwei Segmenten bestehen, beispielsweise aus drei Segmenten, die durch zwei elektrisch leitfähige Verbindungselemente seriell verbunden sind, oder vier Segmenten, die durch drei elektrisch leitfähige Verbindungselemente seriell verbunden sind.

Die elektrisch leitfähige Beschichtung ist erfindungsgemäß flächenmäßig zwischen der Außenscheibe und der Innenscheibe angeordnet. Die elektrisch leitfähige Beschichtung kann auf der zur Zwischenschicht hingewandten Oberfläche der Außenscheibe oder der Innenscheibe aufgebracht sein. Die elektrisch leitfähige Beschichtung kann auch auf einer Schicht der Zwischenschicht aufgebracht sein, beispielsweise auf einer Trägerfolie.

Die elektrisch leitfähige Beschichtung ist transparent. Darunter wird im Sinne der Erfindung eine Beschichtung verstanden, die im Spektralbereich von 500 nm bis 700 nm eine Lichttransmission von größer 70% aufweist. Es handelt sich also um eine Beschichtung, die dafür vorgesehen und geeignet ist, im Wesentlichen flächendeckend auf der Scheibe aufgebracht zu werden, wobei die Durchsicht erhalten bleibt. Die transparente elektrisch leitfähige Beschichtung ist insbesondere keine Struktur aus opaken Heizleitern, beispielsweise geformt aus einer aufgedruckten Silberpaste, die die Durchsicht durch die Scheibe stört und wobei die Durchsicht zwischen den Heizleitern erfolgen muss.

Die elektrisch leitfähige Beschichtung weist zumindest eine elektrisch leitfähige Schicht auf. Die Beschichtung kann zusätzlich dielektrische Schichten aufweisen, die beispielsweise zur Regulierung des Schichtwiderstands, zum Korrosionsschutz oder zur Verminderung der Reflexion dienen. Die leitfähige Schicht enthält bevorzugt Silber oder ein elektrisch leitfähiges Oxid (transparent conductive oxide, TCO) wie Indium-Zinn-Oxid (indium tin oxide, ITO). Die leitfähige Schicht weist bevorzugt eine Dicke von 10 nm bis 200 nm auf. Zur Verbesserung der Leitfähigkeit bei gleichzeitig hoher Transparenz kann die Beschichtung mehrere elektrisch leitfähige Schichten aufweisen, welche durch zumindest eine dielektrische Schicht voneinander getrennt sind. Die leitfähige Beschichtung kann beispielsweise zwei, drei oder vier elektrisch leitfähige Schichten enthalten. Typische dielektrische Schichten enthalten Oxide oder Nitride, beispielsweise Siliziumnitrid, Siliziumoxid, Aluminiumnitrid, Aluminiumoxid, Zinkoxid oder Titanoxid.

In einer besonders bevorzugten Ausgestaltung weist die elektrisch leitfähige Beschichtung mindestens eine elektrisch leitfähige Schicht auf, welche Silber enthält, bevorzugt mindestens 99% Silber. Die Schichtdicke der elektrisch leitfähigen Schicht beträgt bevorzugt von 5 nm bis 50 nm, besonders bevorzugt von 10 nm bis 30 nm. Die Beschichtung weist bevorzugt zwei oder drei dieser leitfähigen Schichten auf, welche durch zumindest eine dielektrische Schicht voneinander getrennt sind. Solche Beschichtungen sind besonders vorteilhaft im Hinblick zum einen auf die Transparenz der Scheibe und zum anderen auf ihre Leitfähigkeit.

Die elektrisch leitfähige Beschichtung kann die gleiche Fläche wie die Scheibe aufweisen und sich bis zu den Seitenkanten des Verbundglases erstrecken. Die elektrisch leitfähige Beschichtung kann aber auch eine kleinere Fläche als das Verbundglas aufweisen, so dass ein umlaufender Randbereich mit einer Breite von bevorzugt 0,5 mm bis 10 mm nicht mit der Beschichtung versehen ist. Die leitfähige Beschichtung ist dadurch innerhalb der Zwischenschicht vor Kontakt mit der umgebenden Atmosphäre geschützt, was im Hinblick auf die Vermeidung von Korrosion vorteilhaft ist. Die Scheibe kann auch weitere unbeschichtete Bereiche enthalten, beispielsweise Datentransmissionsfenster oder Kommunikationsfenster.

Die erfindungsgemäße Seitenscheibe ist in einer vorteilhaften Ausgestaltung eine Seitenscheibe des Seitenfensters, welches geöffnet werden kann. Die Öffnung des Seitenfensters erfolgt durch vertikale Verschiebung der Seitenscheibe in die Karosserietür hinein. Ist das Seitenfenster in geöffnetem Zustand, so sind üblicherweise die Vorderkante (diejenige Kante, welche in Fahrtrichtung nach vorne gerichtet ist) und die Oberkante der Seitenscheibe sichtbar, während die Hinterkante (diejenige Kante, welche in Fahrtrichtung nach hinten gerichtet ist) und die Unterkante durch die Karosserie verdeckt sind. Stromsammelschienen und Verbindungselemente entlang der Hinterkante oder der Unterkante der Scheibe können daher vorteilhaft hinter Teilen der Fahrzeugkarossiere verborgen werden, auch wenn sich das Seitenfenster in geöffnetem Zustand befindet. In einer bevorzugten Ausgestaltung sind die Stromsammelschienen und alle elektrisch leitfähigen Verbindungselemente aus diesem Grund entlang der Hinterkante oder der Unterkante angeordnet. Das bedeutet, dass die Längenrichtung der Stromsammelschienen beziehungsweise der Verbindungselemente ungefähr an der jeweiligen Seitenkante orientiert oder ausgerichtet ist, insbesondere parallel zur Seitenkante angeordnet ist, und dass die Stromsammelschienen und Verbindungselement nahe der jeweiligen Seitenkante angeordnet sind. Der Abstand zwischen den Stromsammelschienen und Verbindungselementen und gegebenenfalls der Unterkante, wenn sie sich entlang der Unterkante erstrecken, beträgt kleiner 10 cm, bevorzugt kleiner 5 cm. Im Bereich der Hinterkante steht üblicherweise ein deutlich kleinerer Bereich zur Verfügung, der durch Karosserieelemente abgedeckt wird. Der Abstand zwischen den Stromsammelschienen und Verbindungselementen und gegebenenfalls der Hinterkante, wenn sie sich entlang der Hinterkante erstrecken, beträgt kleiner 3 cm, bevorzugt kleiner 1,5 cm.

In einer bevorzugten Ausgestaltung der Erfindung beträgt die Heizleistung (Flächenleistungsdichte $P_S$) der beheizbaren Beschichtung mindestens 250 W/m$^2$, besonders bevorzugt mindestens 300 W/m$^2$, ganz besonders bevorzugt mindestens 350 W/m$^2$. Damit wird eine vorteilhafte Heizwirkung erzielt.

Der Schichtwiderstand der elektrisch leitfähigen Beschichtung beträgt bevorzugt von 0,5 Ohm/Quadrat bis 5 Ohm/Quadrat. Damit werden bei üblicherweise im Fahrzeugbereich verwendeten Spannungen vorteilhafte Heizleistungen erreicht, wobei geringe Schichtwiderstande bei gleicher angelegter Spannung zu höheren Heizleistungen führen.

Die Stromsammelschienen sind in einer Ausgestaltung der Erfindung als aufgedruckte und eingebrannte leitfähige Struktur ausgebildet. Die aufgedruckten Stromsammelschienen enthalten zumindest ein Metall, bevorzugt Silber. Die elektrische Leitfähigkeit wird bevorzugt über Metallpartikel, enthalten im Sammelleiter, besonders bevorzugt über Silberpartikel, realisiert. Die Metallpartikel können sich in einer organischen und / oder anorganischen Matrix wie Pasten oder Tinten befinden, bevorzugt als gebrannte Siebdruckpaste mit Glasfritten. Die Schichtdicke der aufgedruckten Stromsammelschienen beträgt bevorzugt von 5 μm bis 40 μm, besonders bevorzugt von 8 μm bis 20 μm und ganz besonders bevorzugt von 10 μm bis 15 μm. Aufgedruckte Stromsammelschienen mit diesen Dicken sind technisch einfach zu realisieren und weisen eine vorteilhafte Stromtragfähigkeit auf. Aufgedruckte Stromsammelschienen eigenen sich insbesondere dann, wenn die elektrisch leitfähige Beschichtung auf einer Oberfläche der Außenscheibe oder der Innenscheibe aufgebracht ist.

Die Stromsammelschienen sind gemäß Z der Erfindung als Streifen einer elektrisch leitfähigen Folie ausgebildet sein. Der Stromsammelschienen enthalten dann beispielsweise zumindest Aluminium, Kupfer, verzinntes Kupfer, Gold, Silber, Zink, Wolfram und/oder Zinn oder Legierungen davon. Der Streifen hat bevorzugt eine Dicke von 10 $\mu$m bis 500 $\mu$m, besonders bevorzugt von 30 $\mu$m bis 300 $\mu$m. Stromsammelschienen aus elektrisch leitfähigen Folien mit diesen Dicken sind technisch einfach zu realisieren und weisen eine vorteilhafte Stromtragfähigkeit auf. Der Streifen kann mit der elektrisch leitfähigen Beschichtung beispielsweise über eine Lotmasse, über einen elektrisch leitfähigen Kleber oder ein elektrisch leitfähiges Klebeband oder durch direktes Auflegen elektrisch leitend verbunden sein. Stromsammelschienen aus Streifen einer leitfähigen Folie eigenen sich insbesondere dann, wenn die elektrisch leitfähige Beschichtung auf einer Schicht der Zwischenschicht angeordnet ist. Zur Verbesserung der leitenden Verbindung kann zwischen leitfähiger Beschichtung und Stromsammelschiene beispielsweise eine silberhaltige Paste angeordnet werden.

Die Länge der Stromsammelschienen hängt von der Gestaltung der elektrisch leitfähigen Beschichtung ab, insbesondere von der Anzahl und Breite der zu kontaktierenden Segmente, und kann vom Fachmann im Einzelfall geeignet gewählt werden. Unter der Länge der typischerweise streifenartigen Stromsammelschienen wird ihre längere Dimension verstanden, entlang derer sie üblicherweise mit den verschiedenen Segmenten der Beschichtung kontaktiert ist.

Die Heizleistung lässt sich bei gegebener angelegter Spannung U (in der Regel durch den Fahrzeughersteller vorgegeben) und Schichtwiderstand $R_S$ und Länge der Stromsammelschienen durch die Breite der Stromsammelschienen beeinflussen. Üblicherweise werden in einem Bereich für die Breite der Stromsammelschienen von 1 mm bis 10 mm, bevorzugt von 2 mm bis 5 mm gute Ergebnisse erzielt.

Die Verbindungselemente sind in einer Ausgestaltung als aufgedruckte und eingebrannte leitfähige Struktur ausgebildet, wobei die vorstehend im Zusammenhang mit den Stromsammelschienen beschriebenen Materialien und Schichtdicken in gleicher Weise auch für die Verbindungselemente gelten. Die Verbindungselemente sind in einer weiteren Ausgestaltung als Streifen einer elektrisch leitfähigen Folie ausgebildet, wobei die vorstehend im Zusammenhang mit den Stromsammelschienen beschriebenen Materialien und Schichtdicken in gleicher Weise auch für die Verbindungselemente gelten. Bevorzugt bestehen die Stromsammelschienen und die Verbindungselemente aus dem gleichen Material, was für eine einfache und kostengünstige Herstellung der Scheibe vorteilhaft ist.

Die Stromsammelschienen und die Verbindungselemente können auch durch eine Kombination aus einer aufgedruckten und eingebrannten leitfähigen Struktur und einem Streifen einer elektrisch leifähigen Folie gebildet werden. Die Stromsammelschienen oder Verbindungselemente umfassen dann eine aufgedruckte leitfähige Struktur mit einem darauf aufgelegten Streifen einer elektrisch leifähigen Folie. Solche Stromsammelschienen oder Verbindungselemente eigenen sich insbesondere dann, wenn die elektrisch leitfähige Beschichtung auf einer Schicht der Zwischenschicht angeordnet ist.

Die Verbindungselemente sind vollständig zwischen Außenscheibe und Innenscheibe angeordnet. Die Verbindungselemente sind also in der erfindungsgemäßen Seitenscheibe einlaminiert. Insbesondere sind die Verbindungselemente keine Kabel, welche sich über den Scheibenrand hinaus erstrecken.

Die Länge der Verbindungselemente richtet sich nach Anzahl, Breite und gegenseitigem Abstand der Segmente der Beschichtung, die durch die Verbindungselemente miteinander verbunden werden sollen. Die Länge wird vom Fachmann dementsprechend geeignet gewählt. Die Länge des Kontaktbereichs zwischen dem Verbindungselement und jedem der durch es kontaktierten Segmente beträgt bevorzugt von 50 % bis 100 %, besonders bevorzugt von 80 % bis 99% der Breite des Segments.

Die Breite der Verbindungselemente beträgt bevorzugt von 1 mm bis 10 mm, besonders bevorzugt von 2 mm bis 5 mm. Die Breite der Verbindungselemente kann gleich der Breite der Stromsammelschienen gewählt werden.

Unter einer Isolierungslinie ist im Sinne der Erfindung ein linienförmiger Bereich innerhalb der elektrisch leitfähigen Beschichtung zu verstehen, welcher nicht elektrisch leitfähig ist. Die Isolierungslinie erstreckt sich bevorzugt über die gesamte Dicke der elektrisch leitfähigen Beschichtung, zumindest aber über die gesamte Dicke der elektrisch leitfähigen Schicht(en) der Beschichtung. Die Isolierungslinie wird bevorzugt mittels eines Lasers in die elektrisch leitfähige Beschichtung eingebracht und durch laserinduzierte Degeneration innerhalb der elektrisch leitfähigen Beschichtung erzeugt. Eine solche laserinduzierte Degeneration ist beispielsweise die Abtragung der elektrisch leitfähigen Schicht oder eine chemische Veränderung der elektrisch leitfähigen Schicht. Durch die laserinduzierte Degeneration wird eine Unterbrechung der elektrischen Leitfähigkeit der Schicht erreicht. Die Isolierungslinie kann aber prinzipiell auch durch andere Verfahren ausgebildet werden, beispielsweise mechanische Abrasion.

Die Linienbreite der erfindungsgemäßen Isolierungslinie beträgt kleiner oder gleich 500 $\mu$m. Besonders bevorzugt beträgt die Linienbreite von 10 $\mu$m bis 250 $\mu$m, ganz besonders bevorzugt von 20 $\mu$m bis 150 $\mu$m. In diesem Bereich für die Linienbreite werden besonders gute Ergebnisse erzielt. Einerseits ist die elektrisch nicht leitfähige Linie breit genug, um zu einer effektiven Unterbrechung der elektrisch leitfähigen Schicht zu führen. Andererseits ist die Linienbreite vorteilhaft gering, um für einen Betrachter nur wenig sichtbar zu sein.

Weist die Scheibe mehr als einen Heizstreifen auf, der aus mindestens zwei seriell verbundenen Segmenten der Beschichtung besteht, so ist es in der Regel erforderlich oder wünschenswert, dass die Verbindungselemente der verschiedenen Heizstreifen übereinander angeordnet sind. Unter übereinander angeordneten Verbindungselementen sind dabei Verbindungselemente zu verstehen, die einen unterschiedlichen Abstand zu der Seitenkante der Scheibe aufweisen, entlang derer sie sich erstrecken, deren Projektionen auf diese Seitenkante sich aber überlappen. Die Segmente eines Heizstreifens dürfen natürlich lediglich mit dem diesen Heizstreifen zugeordneten Verbindungselement in elektrisch leitendem Kontakt stehen und nicht mit den Verbindungselementen der anderen Heizstreifen.

Verbindungselemente, welche solche Segmente überqueren, mit denen sie nicht in Kontakt stehen sollen, können dabei durch ein isolierendes Material von diesen Segmenten getrennt werden. Das isolierende Material ist bevorzugt eine elektrisch nicht leitfähige Folie, welche zwischen den Segmenten der Beschichtung und dem Verbindungselement angeordnet ist. Die isolierende Folie enthält bevorzugt ein Polyimid (PI) und/oder Polyisobutylen (PIB) und weist bevorzugt eine Dicke von 10 $\mu$m bis 200 $\mu$m auf, bevorzugt von 50 $\mu$m bis 100 $\mu$m. Damit werden besonders gute Ergebnisse erreicht.

Alternativ können durch geeignet angeordnete Isolierungslinien die Segmente dermaßen ausgestaltet werden, dass sie sich nicht bis in den Bereich derjenigen Verbindungselemente erstrecken, mit denen sie nicht in Kontakt gebracht werden sollen. Die zur Kontaktierung mit dem Verbindungselement vorgesehen Bereiche der Segmente eines Heizstreifens sind dann unmittelbar benachbart zueinander angeordnet.

Die Außenscheibe und / oder die Innenscheibe enthält bevorzugt Glas, besonders bevorzugt Flachglas, Floatglas, Quarzglas, Borosilikatglas, Kalk-Natron-Glas oder Kunststoffe, vorzugsweise starre Kunststoffe, insbesondere Polyethylen, Polypropylen, Polycarbonat, Polymethylmethacrylat, Polystyrol, Polyamid, Polyester, Polyvinylchlorid und / oder Gemische davon.

Die Dicke der Scheiben kann breit variieren und so hervorragend den Erfordernissen im Einzelfall angepasst werden. Vorzugsweise betragen die Dicken der Außenscheibe und der Innenscheibe von 0,5 mm bis 10 mm und bevorzugt von 1 mm bis 5 mm, ganz besonders bevorzugt von 1,4 mm bis 3 mm.

Die Außenscheibe, die Innenscheibe oder die Zwischenschicht können klar und farblos, aber auch getönt, getrübt oder gefärbt sein. Die Außenscheibe und die Innenscheibe können aus nicht vorgespanntem, teilvorgespanntem oder vorgespanntem Glas bestehen.

Die Zwischenschicht wird durch mindestens eine thermoplastische Verbindungsfolie gebildet. Die thermoplastische Verbindungsfolie enthält zumindest ein thermoplastisches Polymer, bevorzugt Ethylenvinylacetat (EVA), Polyvinylbutyral (PVB) oder Polyurethan (PU) oder Gemische oder Copolymere oder Derivate davon, besonders bevorzugt Polyvinylbutyral. Die Dicke der thermoplastischen Verbindungsfolie beträgt bevorzugt von 0,2 mm bis 2 mm, besonders bevorzugt von 0,3 mm bis 1 mm, beispielsweise 0,38 mm oder 0,76 mm.

Wenn die elektrisch leitfähige Beschichtung auf der Oberfläche der Außenscheibe oder der Innenscheibe aufgebracht ist, dann kann die Zwischenschicht in einer Ausgestaltung der Erfindung durch genau eine thermoplastische Verbindungsfolie gebildet sein. Das ist vorteilhaft im Hinblick auf eine geringe Dicke und einfache Herstellung der Scheibe. Die Zwischenschicht kann jedoch auch aus mehreren Schichten aufgebaut sein, beispielsweise um die akustischen Eigenschaften der Scheibe zu verbessern.

Wenn die elektrisch leitfähige Beschichtung auf einer Trägerfolie (Trägerschicht) aufgebracht ist, so umfasst die Zwischenschicht bevorzugt in der angegebenen Reihenfolge eine erste thermoplastische Folie, die beschichtete Trägerfolie und eine zweite thermoplastische Folie.

Die Trägerfolie enthält bevorzugt zumindest Polyethylenterephthalat (PET), Polyethylen (PE) oder Gemische oder Copolymere oder Derivate davon. Das ist besonders vorteilhaft für die Handhabung die Stabilität und die optischen Eigenschaften der Trägerfolie. Die Trägerfolie weist bevorzugt eine Dicke von 5 $\mu$m bis 500 $\mu$m, besonders bevorzugt von 10 $\mu$m bis 200 $\mu$m und ganz besonders bevorzugt von 12 $\mu$m bis 75 $\mu$m. Trägerschichten mit diesen dicken lassen sich vorteilhaft in Form von flexiblen und gleichzeitig stabilen Folien bereitstellen, dies sich gut handhaben lassen.

Die Erfindung umfasst weiter ein Verfahren zur Herstellung einer erfindungsgemäßen beheizbaren laminierten Seitenscheibe, mindestens umfassend

(a) Bereitstellen einer Außenscheibe, einer Innenscheibe und einer Zwischenschicht, wobei die Außenscheibe, die Innenscheibe oder eine Folie der Zwischenschicht mit einer elektrisch leitfähigen Beschichtung versehen sind,
(b) Einbringen von Isolierungslinien in die elektrisch leitfähige Beschichtung, wobei die elektrisch leitfähige Beschichtung in streifenförmige Segmente aufgeteilt wird,
(c) eine erste Stromsammelschiene und eine zweite Stromsammelschiene und elektrisch leitfähige Verbindungselemente mit der elektrisch leitfähigen Beschichtung in Kontakt gebracht werden, so dass zwischen der ersten Stromsammelschiene und der zweiten Stromsammelschiene verlaufende und jeweils zumindest ein Segment enthaltende Heizstreifen gebildet werden,
wobei

- zumindest ein Heizstreifen durch mindestens zwei Segmente gebildet wird, welche über mindestens ein elektrisch leitfähiges Verbindungselement elektrisch leitend miteinander verbunden sind, und
- die Länge jedes einzelnen Heizstreifens um höchstens 10 % von der mittleren Länge der Heizstreifen abweicht, und

(d) die Außenscheibe mit der Innenscheibe über die Zwischenschicht durch Lamination verbunden wird.

Die Zwischenschicht wird in Form zumindest einer Folie bereitgestellt.

Das Einbringen der Isolierungslinien erfolgt, wie vorstehen beschrieben, bevorzugt durch Laserbearbeitung, kann aber prinzipiell auch mit anderen Methoden erfolgen.

Das Anbringen der Verbindungselemente und Stromsammelschienen kann insbesondere durch Auflegen, Aufdrucken, Löten oder Kleben erfolgen

Die Herstellung des Verbundglases durch Lamination erfolgt mit üblichen, dem Fachmann an sich bekannten Methoden, beispielsweise Autoklavverfahren, Vakuumsackverfahren, Vakuumringverfahren, Kalanderverfahren, Vakuumlaminatoren oder Kombinationen davon. Die Verbindung von Außenscheibe und Innenscheibe dabei erfolgt üblicherweise unter Einwirkung von Hitze, Vakuum und / oder Druck.

Die erfindungsgemäße Seitenscheibe wird bevorzugt in Fortbewegungsmitteln für den Verkehr auf dem Lande, in der Luft oder zu Wasser verwendet, insbesondere in Kraftfahrzeugen.

Im Folgenden wird die Erfindung anhand einer Zeichnung und Ausführungsbeispielen näher erläutert. Die Zeichnung ist eine schematische Darstellung und nicht maßstabsgetreu. Die Zeichnung schränkt die Erfindung in keiner Weise ein.

Es zeigen:

Fig. 1  eine Draufsicht auf eine Ausgestaltung der erfindungsgemäßen Seitenscheibe,

Fig. 2  einen vergrößerten Ausschnitt des Bereichs um die elektrisch leitfähigen Verbindungselemente in einer Ausgestaltung der erfindungsgemäßen Seitenscheibe,

Fig. 3  einen vergrößerten Ausschnitt des Bereichs um die elektrisch leitfähigen Verbindungselemente in einer weiteren Ausgestaltung der erfindungsgemäßen Seitenscheibe,

Fig. 4  einen Querschnitt durch eine Ausgestaltung der erfindungsgemäßen Seitenscheibe,

Fig. 5  einen Querschnitt durch eine weitere Ausgestaltung der erfindungsgemäßen Seitenscheibe,

Fig. 6  eine Draufsicht auf eine weitere Ausgestaltung der erfindungsgemäßen Seitenscheibe,

Fig. 7  eine Draufsicht auf eine weitere Ausgestaltung der erfindungsgemäßen Seitenscheibe und

Fig. 8  ein Flussdiagramm einer Ausführungsform des erfindungsgemäßen Verfahrens.

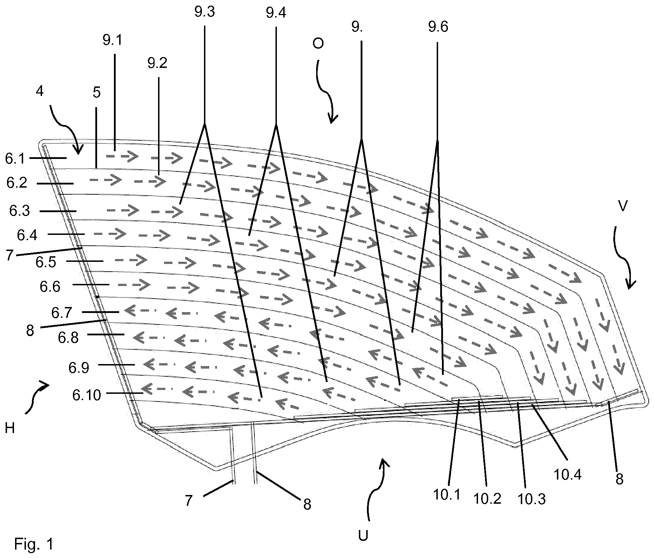

Fig. 1 zeigt Draufsicht auf eine Ausgestaltung der erfindungsgemäßen beheizbaren laminierten Seitenscheibe. Die Seitenscheibe ist ein Verbundglas aus einer Außenscheibe, einer Innenscheibe und einer Zwischenschicht, welche die beiden Scheiben miteinander verbindet. Zwischen der Außenscheibe und der Innenscheibe ist eine elektrisch leitfähige Beschichtung 4 angeordnet. Die elektrisch leitfähige Beschichtung 4 ist mit einer ersten Stromsammelschiene 7 und einer zweiten Stromsammelschiene 8 kontaktiert. Wird an die Stromsammelschienen 7,8 eine Spannung angelegt, so fließt ein Strom durch die elektrisch leitfähige Beschichtung 4, wodurch die Heizwirkung entsteht. Die Seitenscheibe für das Fenster eines Personenkraftwagens vorgesehen, welches sich durch Herunterfahren der Seitenscheibe öffnen lässt.

Aufgrund der komplexen Form der Seitenscheibe ist es nicht möglich, die Stromsammelschienen 7,8 parallel zueinander an gegenüberliegenden Kanten anzuordnen. Die nicht-parallele Anordnung würde bei einer herkömmliche Beschichtung 4 zu einer stark vermindert Homogenität des Stromflusses zwischen den Stromsammelschienen 7,8 und damit der Heizwirkung führen. Aufgabe der Erfindung ist es, die die Homogenität der Temperaturverteilung in diesem Fall zu verbessern.

Dazu ist die Beschichtung 4 durch Isolierungslinien 5 in zehn Segmente 6 aufgeteilt. Die Segmente 6 sind durch die Isolierungslinien 5 vollständig voneinander elektrisch isoliert. Durch die Segmente 6 wird die Ausbreitungsrichtung der Strompfade zwischen den Stromsammelschienen 7,8 bestimmt und der Strom gleichmäßig über die Fläche der Scheibe geleitet, so dass eine möglichst vollflächige Heizwirkung erreicht wird.

Die Isolierungslinien 5 verlaufen von der Hinterkante H der Scheibe etwa parallel zur Oberkante O und Vorderkante V bis zur Unterkante U, wobei die Isolierungslinien 5 äquidistant mit einem gleichbleibenden Abstand zueinander von 4 cm angeordnet sind, was der Breite der Segmente 6 entspricht.

Die Segmente 6 weisen allerdings aufgrund der komplexen Scheibenform eine unterschiedliche Länge auf. Wäre jedes Segment 6 mit den beiden Stromsammelschienen 7,8 kontaktiert, so würde sich in jedem Segment jeweils ein Strompfad ausbilden. Da die Temperatur, auf die sich die Beschichtung 4 erwärmt, von der Länge des Segmentes 6 abhängt, würde der Strom zwar über die gesamte Scheibe geleitet werden, aber die Temperatur und damit die Heizwirkung wäre hochgradig inhomogen.

Um Strompfade mit gleicher oder zumindest sehr ähnlicher Länge zu erzeugen, sind einige der Segmente 6 durch Verbindungselemente 10 paarweise seriell miteinander verbunden, wobei das erste Segment an seinem einen Ende mit der ersten Stromsammelschiene 7 und das zweite Segmente an seinem gegenüberliegenden Ende mit der zweiten Stromsammelschiene 8 kontaktiert ist. Der Strom fließt also zunächst entlang des ersten Segments und anschließend entlang des zweiten Segments. Ein Segment, das mit den beiden Stromsammelschienen 7, 8 verbunden ist, oder eine Gruppe von miteinander seriell verbundenen Segmenten, die mit den beiden Stromsammelschienen 7, 8 verbunden ist, wird im Sinne der Erfindung als Heizstreifen bezeichnet.

Die Stromsammelschienen 7, 8 und die Verbindungselemente 10 sind beispielsweise als Streifen einer Kupferfolie mit einer Dicke von 50 μm und einer Breite von 4 mm ausgebildet und sind beispielsweise mit einem 50 μm dicken elektrisch leitfähigen Klebeband auf der Beschichtung 4 aufgebracht.

Die erste Stromsammelschiene 7 verläuft etwa entlang der oberen Hälfte der Hinterkante H der Scheibe und ist mit den Segmenten 6.1, 6.2, 6.3, 6.4 und 6.5 verbunden. Ist die Beschichtung 4 beispielsweise auf einer Trägerfolie der Zwischenschicht aufgebracht, so lässt sich diese Kontaktierung verwirklichen, indem die Stromsammelschiene in dem Bereich, in dem sie mit der Beschichtung 4 kontaktiert werden soll, auf der beschichteten Oberfläche verläuft, dann durch eine Durchführung in der Trägerfolie geführt wird und an der gegenüberliegenden Oberfläche der Trägerfolie weiter verläuft, um dann beispielsweise an der Unterkante U der Scheibe mit einer externen Spannungsquelle verbunden zu werden. Die zweite Stromsammelschiene 8 verläuft etwa entlang der unteren Hälfte der Hinterkante H der Scheibe und entlang der etwa der gesamten Unterkante U. An der Hinterkante H ist die zweite Stromsammelschiene 8 mit den Segmenten 6.6, 6.7, 6.8, 6.9 und 6.10 verbunden. An der Unterkante U ist die zweite Stromsammelschiene 8 nur mit den Segmenten 6.1 und 6.2 verbunden.

Das Segment 6.3 ist mit dem Segment 6.10 über das elektrisch leitfähige Verbindungselement 10.4 verbunden. Das Segment 6.4 ist mit dem Segment 6.9 über das elektrisch leitfähige Verbindungselement 10.3 verbunden. Das Segment 6.5 ist mit dem Segment 6.8 über das elektrisch leitfähige Verbindungselement 10.2 verbunden. Das Segment 6.6 ist mit dem Segment 6.7 über das elektrisch leitfähige Verbindungselement 10.1 verbunden.

Die Stromsammelschienen 7, 8 und die Verbindungselemente 10 sind entlang der Hinterkante H und/oder der Unterkante U der Scheibe angeordnet. Der Abstand von der Hinterkante beträgt kleiner 1 cm, der Abstand von der Unterkante kleiner 3 cm. Wird die Seitenscheibe zum Öffnen des Fensters heruntergefahren, so bleiben diese Elemente hinter der Karosserie der Fahrzeugtür vorteilhaft verborgen. Die Oberkante O und die Vorderkante V, welche im geöffneten Zustand zu sehen sind, bleiben vorteilhaft frei von den Stromsammelschienen 7, 8 und den Verbindungselemente 10.

In der dargestellten Ausgestaltung bildet das Segment 6.1 den Heizstreifen 9.1 und das Segment 6.2 den Heizstreifen 9.2. Die Segmente 6.3 und 6.10 bilden zusammen den Heizstreifen 9.3. Die Segmente 6.4 und 6.9 bilden zusammen den Heizstreifen 9.4. Die Segmente 6.5 und 6.8 bilden zusammen den Heizstreifen 9.5. Die Segmente 6.6 und 6.7 bilden zusammen den Heizstreifen 9.6. Der Verlauf der Strompfade zwischen den Stromsammelschienen 7,8 entlang der Heizstreifen 9 ist in der Figur durch gestrichelte Pfeile angedeutet.

Die Länge der Heizpfade 9 eines Ausführungsbeispiels ist in Tabelle 1 zusammengefasst. Der arithmetische Mittelwert der Länge aller Heizpfade 9 beträgt 1128 mm. Die maximale Abweichung der Länge eines Heizpfades von diesem Mittelwert beträgt 12,5 %. Durch die sehr ähnliche Länge aller Heizpfade 9 werden sie durch den Stromfluss auf eine sehr ähnliche Temperatur erwärmt. Das ist der große Vorteil der Erfindung.

Tabelle 1

| Heizpfad | Länge des Heizpfades / mm | Abweichung vom Mittelwert | |
|----------|---------------------------|---------------------------|-----|
| | | / mm | / % |
| 9.1 | 1063 | 65 | 5,8% |
| 9.2 | 999 | 129 | 11,4% |
| 9.3 | 1226 | 98 | 8,7% |
| 9.4 | 987 | 141 | 12,5% |
| 9.5 | 1264 | 136 | 12,1% |
| 9.6 | 1229 | 101 | 9,0% |

Die hier angegebenen Ausgestaltungen und Werte sind als Ausführungsbeispiele zu verstehen und sollen die Erfindung nicht einschränken. Dem Fachmann hat eine große Gestaltungsfreiheit beim Entwurf der Segmente 6 und deren Verschaltung zur den Heizstreifen 9. Es ist durch geeignete Wahl der Segmente und deren Verschaltung möglich, die Längenabweichungen vom Mittelwert weiter zu reduzieren.

In einem weiteren Ausführungsbeispiel mit einer ähnlichen geometrischen Gestaltung der zehn Segmente 6 wie in Fig. 1, wobei jeweils zwei der Segmente 6 (6.1 und 6.10; 6.2 und 6.9; 6.3 und 6.8; 6.4 und 6.7; 6.5 und 6.6) zu insgesamt fünf Heizstreifen 9 verschaltet wurden, wurde die Längenverteilung aus Tabelle 1a beobachtet. Der arithmetische Mittelwert der Länge aller Heizpfade 9 beträgt 1397 mm. Die maximale Abweichung der Länge eines Heizpfades von diesem Mittelwert beträgt lediglich 2,1 %.

Tabelle 1a

| Heizpfad | Länge des Heizpfades / mm | Abweichung vom Mittelwert | |
|---|---|---|---|
| | | / mm | / % |
| 9.1 | 1367 | 30 | 2,1% |
| 9.2 | 1391 | 6 | 0,4% |
| 9.3 | 1408 | 11 | 0,8% |
| 9.4 | 1415 | 18 | 1,3% |
| 9.5 | 1404 | 7 | 0,5% |

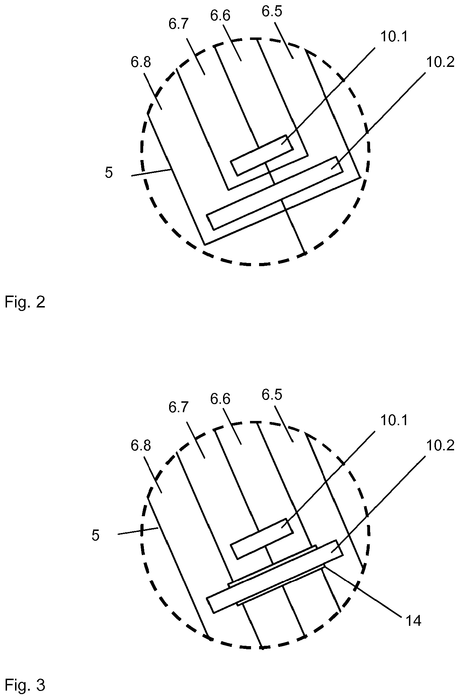

Fig. 2 und Fig. 3 zeigen Detailansichten der Verbindung verschiedener Segmente 6 mittels der Verbindungselemente 10. Die Figuren zeigen alternative Lösungen, um sicherzustellen, dass jedes Verbindungselement 10 nur mit denjenigen Segmenten 6 in leitendem Kontakt steht, die dafür vorgesehen sind, durch dieses Verbindungselement 10 zu einem Heizstreifen 9 verbunden zu werden. Die elektrisch leitfähige Beschichtung 4 mit den Segmenten 6 und den Verbindungselementen 10 ist so ausgebildet wie in gezeigt Figur 1. Die Darstellungen sollen das Prinzip der seriellen Verbindung der Segmente 6 veranschaulichen und sind auch auf andere Ausbildungen der elektrisch leitfähigen Beschichtung 4 entsprechend übertragbar.

In Fig. 2 sind die Segmente 6 durch die geeignete Anordnung der Isolierungslinien 5 so ausgebildet, dass die jeweils zwei Segmenten, welche seriell verbunden werden sollen, im Bereich der Verbindung unmittelbar zueinander benachbart angeordnet sind. Prinzipiell ist es beispielsweise denkbar, dass die beiden Segmenten insgesamt unmittelbar zueinander benachbart angeordnet sind, wodurch auch ihre Endbereiche, in denen die serielle Verbindung stattfindet, zwangsläufig unmittelbar zueinander benachbart angeordnet sind. In der gezeigten Ausgestaltung ist die Beschichtung 4 in sich umklammernde Segmentpaare aufgeteilt. Das erste Segmentpaar besteht aus den Segmenten 6.6 und 6.7, welche insgesamt unmittelbar benachbarte zueinander angeordnet sind und im Endbereich durch das Verbindungselement 10.1 seriell verbunden sind. Das zweite Segmentpaar besteht aus den Segmenten 6.5 und 6.8, die im Endbereich durch das Verbindungselement 10.2 seriell verbunden sind, und umklammert das erste Segmentpaar. Das bedeutet, dass jeweils ein Segment des zweiten Segmentpaares jeweils einem Segment des ersten Segmentpaares unmittelbar benachbart ist. Das erste Segmentpaar ist etwas kürzer ausgebildet als das zweite Segmentpaar, so dass es sich nicht bis in den Bereich des zweiten elektrisch leitfähigen Verbindungselementes 10.2 erstreckt. Die Segmente 6.5 und 6.8 weisen daher einen Endbereich auf, der über das erste Segmentpaar übersteht und in dem die Segmente 6.5 und 6.8 unmittelbar zueinander benachbart sind. In diesem Endbereich ist das Verbindungelement 10.2 angeordnet. Das folgende Segmentpaar umklammert in analoger Weise das zweite Segmentpaar und so weiter.

In Fig. 3 muss das Verbindungselement 10.2, welches das zweite Segmentpaar 6.5,6.8 verbindet, das erste Segmentpaar 6.6, 6.7 überbrücken, weil sich das erste Segmentpaar im Unterschied zu Fig. 2 bis in den Bereich des zweiten Verbindungselement 10.2 erstreckt. Diese Situation liegt beispielsweise vor, wenn sich alle Isolierungslinien 5 bis zur Seitenkante der Scheibe erstrecken. Um einen elektrischen Kontakt zwischen dem Verbindungselement 10.2 und den Segmenten 6.6 und 6.7 zu verhindern, ist zwischen diesen Segmenten 6.6 und 6.7 und dem Verbindungselement 10.2 ein Streifen einer Isolierfolie 14 angeordnet, beispielsweise ein Polyimid-Band (Kapton®).

Insbesondere die zweite, in Figur 3 dargestellte Variante ist sehr flexible einsetztbar immer dann, wenn ein Verbindungselement über eine oder mehrere Segmente verläuft, mit denen es nicht elektrisch leitend verbunden werden soll.

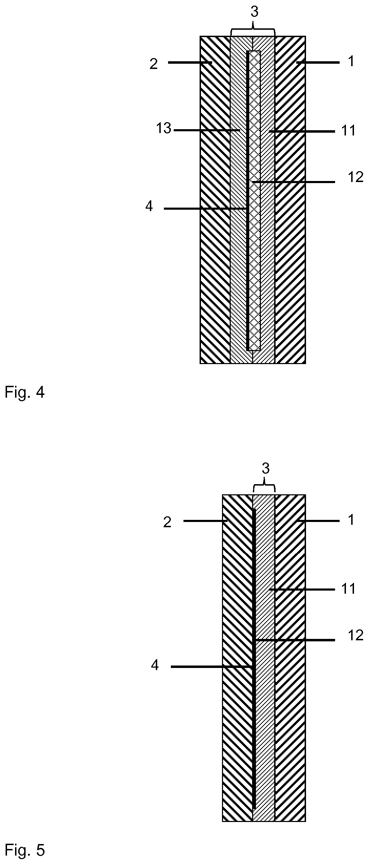

Fig. 4 und Fig. 5 zeigen beispielshaft verschiedene Möglichkeiten der Anordnung der elektrisch leitfähigen Beschichtung 4 in der laminierten Seitenscheibe. Die Figuren zeigen Querschnitte zweier Ausgestaltungen des Verbundglases aus Außenscheibe 1 und Innenscheibe 2, welche über eine Zwischenschicht 3 miteinander verbunden sind. Sie Außenscheibe und die Innenscheibe bestehen aus Kalk-Natron-Glas und weisen jeweils eine Dicke von 2,1 mm auf.

In Fig. 4 umfasst die Zwischenschicht 3 eine erste Verbindungsfolie 11 und eine zweite Verbindungsfolie 13, zwischen die eine Trägerfolie 12 eingebracht ist. Die Verbindungsfolien 11, 13 bestehen aus Polyvinylbutyral (PVB) und weisen jeweils eine Dicke von 0,76 mm auf. Die Trägerfolie 12 besteht aus Polyethylenterephthalat (PET) und weist ein Dicke von 75 μm auf. Die Trägerfolie 12 ist mit der elektrisch leitfähigen Beschichtung 4 versehen. Die Beschichtung 4 ist ein Schichtstapel, welcher beispielsweise zwei elektrisch leitfähige Schichten aus Silber und einige dielektrische Schichten enthält. Solche beschichteten Trägerfolien sind kommerziell erhältlich. Üblicherweise betragen die Flächenwiderstände der Schichten zwischen 1 Ω/Quadrat und 10 Ω/ Quadrat, beispielsweise 2,5 Ω/Quadrat oder 4,5 Ω/Quadrat. Beschichtungen mit solchen Flächenwiderständen sind insbesondere für elektrische Fahrzeuge interessant, weil mit den dort üblichen Bordspannungen von etwa 42 V eine vorteilhafte Heizleistung, insbesondere größer oder gleich 350 W/m$^2$ erreicht werden kann.

Die Trägerfolie 12 weist einen Rückschnitt bezogen auf die Fläche des Verbundglases auf und erstreckt sich nicht bis zur Seitenkante des Verbundglases, sondern weist einen umlaufenden Abstand zur Seitenkante von beispielsweise 10 mm auf. Die Beschichtung 4 ist daher vorteilhaft im Inneren der Zwischenschicht 4 vor Korrosion geschützt.

In Fig. 5 umfasst die Zwischenschicht eine einzige Verbindungsfolie 11, die beispielsweise aus PVB besteht und eine Dicke von 0,76 mm aufweist. Die elektrisch leitfähige Beschichtung 4 ist auf der zur thermoplastischen Zwischenschicht 3 hingewandten Oberfläche der Innenscheibe 2 aufgebracht. Die elektrisch leitfähige Schicht 4 ist wiederum typischerweise ein Schichtenstapel mit beispielsweise zwei oder drei Schichten, mit solchen Beschichtungen können Flächenwiderstände kleiner 1 Ω/Quadrat erreicht werden, was für eine hohe Heizleistung auch bei einer Spannung von lediglich etwa 14 V, was der Bordspannung von üblichen PKWs entspricht. Die Innenscheibe 2 weist einen umlaufenden Randbereich mit einer Breite von beispielsweise 2 mm, der nicht mir der Beschichtung 4 versehen ist. Die Beschichtung 4 hat somit keinen Kontakt zur umgebenden Atmosphäre und ist im Inneren der Zwischenschicht 4 vorteilhaft vor Korrosion geschützt. Die Beschichtung 4 könnte auch auf der zur Zwischenschicht 3 hingewandten Oberfläche der Außenscheibe 1 aufgebracht sein.

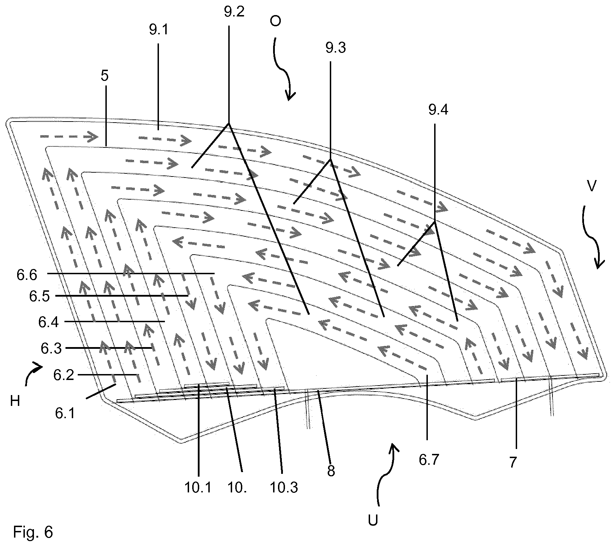

Fig. 6 zeigt eine alternative Ausgestaltung der Heizpfade 9. Die Isolierungslinien 5 verlaufen von der Unterkante U in der hinteren Hälfte der Scheibe etwa parallel zur Hinterkante H, dann Oberkante O und dann Vorderkante V bis zur Unterkante U in der vorderen Hälfte der Scheibe. Die Breite der Segmente 6 beträgt 4 cm.

Die erste Stromsammelschiene 7 verläuft etwa entlang der Unterkante U im vorderen Bereich der Scheibe und ist mit den Segmenten 6.1, 6.2, 6.3 und 6.4 verbunden. Die zweite Stromsammelschiene 8 beginnt gleich hinter der erste Stromsammelschiene 8 im Bereich des Segments 6.5 und verläuft entlang der Unterkante U der Scheibe bis nahe der Hinterkante H. Die Segmente 6.5, 6.6 und 6.7 sind von der zweiten Stromsammelschiene 8 in der vorderen Hälfte der Scheibe kontaktiert und das Segment 6.1 am hinteren Ende der Scheibe.

Das Segment 6.1 bildet den Heizstreifen 9.1. Das Segment 6.2 ist mit dem Segment 6.7 über das elektrisch leitfähige Verbindungselement 10.3 zum Heizstreifen 9.2 verbunden. Das Segment 6.3 ist mit dem Segment 6.6 über das elektrisch leitfähige Verbindungselement 10.2 zum Heizstreifen 9.3 verbunden. Das Segment 6.4 ist mit dem Segment 6.5 über das elektrisch leitfähige Verbindungselement 10.1 zum Heizstreifen 9.4 verbunden. Die Stromsammelschienen 7, 8 und die Verbindungselemente 10 sind entlang der Unterkante U der Scheibe angeordnet und bleiben hinter der Karosserie der Fahrzeugtür vorteilhaft verborgen.

Die Länge der Heizpfade 9 eines Ausführungsbeispiels ist in Tabelle 2 zusammengefasst. Der arithmetische Mittelwert der Länge aller Heizpfade 9 beträgt 1731 mm. Die maximale Abweichung der Länge eines Heizpfades von diesem Mittelwert beträgt 13,2 %.

Tabelle 2

| Heizpfad | Länge des Heizpfades / mm | Abweichung vom Mittelwert | |
|---|---|---|---|
| | | / mm | / % |
| 9.1 | 1503 | 228 | 13,2% |
| 9.2 | 1809 | 78 | 4,5% |
| 9.3 | 1809 | 78 | 4,5% |
| 9.4 | 1803 | 72 | 4,2% |

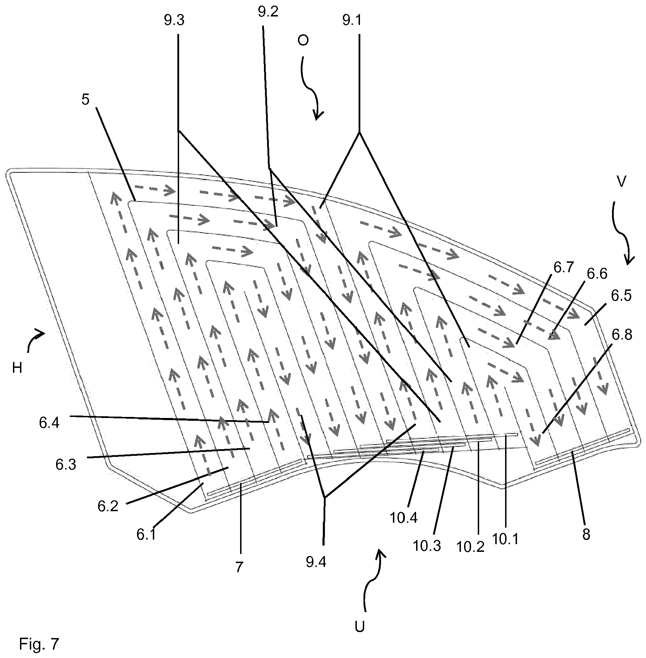

Fig. 7 zeigt eine alternative Ausgestaltung der Heizpfade 9, welche deutlich von den vorgenannten Ausführungsbeispielen abweicht. Die Segmente 6 sind nicht allesamt parallel zueinander angeordnet, sondern in zwei Gruppen aufgeteilt. Die Segmente 6.1, 6.2, 6.3 und 6.4 der ersten Gruppe decken einen hinteren Bereich der Scheibe ab, in welchem sie schleifenartig und parallel zueinander von einem hinteren Abschnitt der Unterkante U zu einem vorderen Abschnitt der Unterkannte verlaufen. Die Segmente 6.5, 6.6, 6.7 und 6.8 der zweiten Gruppe decken entsprechend einen vorderen Bereich der Scheibe ab. Die Breite der Segmente 6 beträgt 4 cm.

Die Stromsammelschienen 6, 7 sind wieder im Bereich der Unterkante U angeordnet. Die erste Stromsammelschiene 7 kontaktiert die Segmente 6 der ersten Gruppe im hinteren Abschnitt der Unterkante U. Die zweite Stromsammelschiene 8 kontaktiert die Segmente 6 der zweiten Gruppe im vorderen Abschnitt der Unterkante U.

Jeweils ein Segment 6 der ersten Gruppe ist mit jeweils einem Segment 6 der zweiten Gruppe über ein Verbindungselement 10 verbunden, wobei das längste Segment 6.1 der ersten Gruppe mit dem kürzesten Segment 6.8 der zweiten Gruppe verbunden ist, das zweitlängste Segment 6.2 der ersten Gruppe mit dem zweitkürzesten Segment 6.7 der zweiten Gruppe und so weiter.

Die Segmente 6.1 und 6.8 sind über das elektrisch leitfähige Verbindungselement 10.1 zum Heizstreifen 9.1 verbunden. Die Segmente 6.2 und 6.7 sind über das elektrisch leitfähige Verbindungselement 10.2 zum Heizstreifen 9.2 verbunden. Die Segmente 6.3 und 6.6 sind über das elektrisch leitfähige Verbindungselement 10.3 zum Heizstreifen 9.3 verbunden. Die Segmente 6.4 und 6.5 sind über das elektrisch leitfähige Verbindungselement 10.4 zum Heizstreifen 9.4 verbunden.

Die Länge der Heizpfade 9 eines Ausführungsbeispiels ist in Tabelle 3 zusammengefasst. Der arithmetische Mittelwert der Länge aller Heizpfade 9 beträgt 1509 mm. Die maximale Abweichung der Länge eines Heizpfades von diesem Mittelwert beträgt 3,4%.

Tabelle 3

| Heizpfad | Länge des Heizpfades / mm | Abweichung vom Mittelwert | |
| --- | --- | --- | --- |
| | | / mm | / % |
| 9.1 | 1457 | 52 | 3,4% |
| 9.2 | 1500 | 9 | 0,6% |
| 9.3 | 1531 | 22 | 1,5% |
| 9.4 | 1547 | 38 | 2,5% |

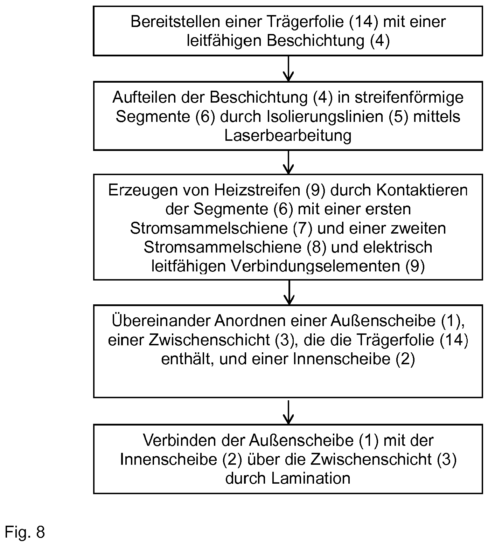

Fig. 8 zeigt ein Flussdiagramm eines Ausführungsbeispiels des erfindungsgemäßen Verfahrens zur Herstellung einer erfindungsgemäßen laminierten beheizbaren Seitenscheibe.

Bezugszeichenliste:

(1)         Außenscheibe
(2)         Innenscheibe
(3)         Zwischenschicht
(4)         elektrisch leitfähige Beschichtung
(5)         Isolierungslinie
(6), (6.x)  Segment der Beschichtung 4
(7)         erste Stromsammelschiene
(8)         zweite Stromsammelschiene
(9), (9.x)  Heizstreifen
(10), (10.x) elektrisch leitfähiges Verbindungselement
(11)        Verbindungsfolie
(12)        Trägerfolie
(13)        zweite Verbindungsfolie
(14)        Isolierfolie

H    Hinterkante der Seitenscheibe
O    Oberkante der Seitenscheibe
V    Vorderkante der Seitenscheibe
U    Unterkante der Seitenscheibe

**Patentansprüche**

1. Beheizbare laminierte Seitenscheibe, mindestens umfassend eine Außenscheibe (1) und eine Innenscheibe (2), welche über eine thermoplastische Zwischenschicht (3) miteinander verbunden sind, und eine flächenmäßig zwischen der Außenscheibe (1) und der Innenscheibe (2) angeordnete, transparente elektrisch leitfähige Beschichtung (4), welche durch Isolierungslinien (5) in Segmente (6) aufgeteilt ist, wobei die Linienbreite der Isolierungslinien (5) kleiner oder gleich 500 μm beträgt, und wobei

   - die Beschichtung (4) zwischen einer ersten Stromsammelschiene (7) und einer zweiten Stromsammelschiene (8) verlaufende und jeweils zumindest ein Segment (6) enthaltende Heizstreifen (9) aufweist, wobei die Heizstreifen (9) durch die Isolierungslinien (5) elektrisch voneinander isoliert sind,
   - zumindest ein Heizstreifen (9) durch mindestens zwei Segmente (6) gebildet wird, welche über mindestens ein elektrisch leitfähiges Verbindungselement (10) seriell elektrisch leitend miteinander verbunden sind, und
   - die Länge jedes einzelnen Heizstreifens (9) um höchstens 15 % von der mittleren Länge der Heizstreifen (9) abweicht,

   und wobei die Verbindungselemente (10) und die Stromsammelschienen (7,8) ausgebildet sind als Streifen einer elektrisch leitfähigen Folie oder als gebrannte Siebdruckpaste.

2. Seitenscheibe nach Anspruch 1, wobei jeder Heizstreifen (9) durch ein oder zwei Segmente (6) gebildet wird und wobei die Anzahl der Segmente (6) bevorzugt von 5 bis 15 beträgt.

3. Seitenscheibe nach Anspruch 1 oder 2, wobei die Länge jedes einzelnen Heizstreifens (9) um höchstens 10 %, besonders bevorzugt um höchstens 5% von der mittleren Länge der Heizstreifen (9) abweicht.

4. Seitenscheibe nach einem der Ansprüche 1 bis 3, wobei die Breite der Heizstreifen (9) von 1 cm bis 10 cm beträgt, bevorzugt von 2 cm bis 6 cm, und wobei bevorzugt alle Heizstreifen (9) die gleiche Breite aufweisen.

5. Seitenscheibe nach einem der Ansprüche 1 bis 4, wobei die zur Kontaktierung mit dem Verbindungselement vorgesehen Bereiche der Segmente (6) eines Heizstreifens (9) unmittelbar benachbart zueinander angeordnet sind.

6. Seitenscheibe nach einem der Ansprüche 1 bis 4, wobei zwischen einem Verbindungselement (10) und Segmenten (6), mit denen das Verbindungselement (10) nicht verbunden werden soll, eine Isolationsfolie (14) angeordnet ist, welche bevorzugt ein Polyimid (PI) und/oder Polyisobutylen (PIB) enthält und bevorzugt eine Dicke von 10 μm bis 200 μm aufweist.

7. Seitenscheibe nach einem der Ansprüche 1 bis 6, wobei die Linienbreite der Isolierungslinien (5) von 10 μm bis 250 μm beträgt, bevorzugt von 20 μm bis 150 μm.

8. Seitenscheibe nach einem der Ansprüche 1 bis 7, wobei die elektrisch leitfähige Folie Kupfer enthält oder die gebrannte Siebdruckpaste Silberpartikel enthält.

9. Seitenscheibe nach einem der Ansprüche 1 bis 8, wobei jedes Verbindungselement (10) eine Breite von 1 mm bis 10 mm aufweist und wobei die Länge des Kontaktbereichs zwischen dem Verbindungselement (10) und jedem der durch das Verbindungselemente (10) kontaktierten Segments (6) von 50 % bis 100 %, bevorzugt von 80 % bis 99% der Breite des Segments (6) beträgt.

10. Seitenscheibe nach einem der Ansprüche 1 bis 9, wobei die Verbindungselemente (10) und die Stromsammelschienen (7,8) entlang der Unterkante (U) und/oder der Hinterkante (H) der Scheibe angeordnet sind und der Abstand zur Unterkante (U) kleiner 10 cm, bevorzugt kleiner 5 cm beträgt und der Abstand zur Hinterkante (H) kleiner 3 cm, bevorzugt kleiner 1,5 cm beträgt.

11. Seitenscheibe nach einem der Ansprüche 1 bis 10, wobei die elektrisch leitfähige Beschichtung (4) auf der Außenscheibe (1), auf der Innenscheibe (2) oder auf einer Trägerfolie (12) in der Zwischenschicht (3) aufgebracht ist und bevorzugt mindestens eine elektrisch leitfähige Schicht umfasst, welche zumindest Silber enthält und eine Dicke von 10 nm bis 50 nm aufweist, bevorzugt zwei oder drei elektrisch leifähige Schichten.

12. Seitenscheibe nach einem der Ansprüche 1 bis 11, wobei die Heizleistung $P_S$ mindestens 250 W/m$^2$, bevorzugt

mindestens 300 W/m$^2$, besonders bevorzugt mindestens 350 W/m$^2$ beträgt.

13. Verfahren zur Herstellung einer beheizbaren laminierten Seitenscheibe nach einem der Ansprüche 1 bis 12, mindestens umfassend

(a) Bereitstellen einer Außenscheibe (1), einer Innenscheibe (2) und einer Zwischenschicht (3), wobei die Außenscheibe (1), die Innenscheibe (2) oder eine Folie der Zwischenschicht (3) mit einer transprenten elektrisch leitfähigen Beschichtung (4) versehen sind,
(b) Einbringen von Isolierungslinien (5) in die elektrisch leitfähige Beschichtung (4), wobei die elektrisch leitfähige Beschichtung (4) in streifenförmige Segmente (6) aufgeteilt wird,
(c) eine erste Stromsammelschiene (7) und eine zweite Stromsammelschiene (8) und elektrisch leitfähige Verbindungselemente (10) mit der elektrisch leitfähigen Beschichtung (4) in Kontakt gebracht werden, so dass zwischen der ersten Stromsammelschiene (7) und der zweiten Stromsammelschiene (8) verlaufende und jeweils zumindest ein Segment (6) enthaltende Heizstreifen (9) gebildet werden, wobei, die Linienbreite der Isolierungslinien (5) kleiner oder gleich 500 µm beträgt,

- die Verbindungselemente (10) und die Stromsammelschienen (7,8) ausgebildet sind als Streifen einer elektrisch leitfähigen Folie oder als gebrannte Siebdruckpaste,
- zumindest ein Heizstreifen durch mindestens zwei Segmente (6) gebildet wird, welche über mindestens ein elektrisch leitfähiges Verbindungselement (10) seriell elektrisch leitend miteinander verbunden sind, und
- die Länge jedes einzelnen Heizstreifens (9) um höchstens 10 % von der mittleren Länge der Heizstreifen (9) abweicht, und

(d) die Außenscheibe (1) mit der Innenscheibe (2) über die Zwischenschicht (3) durch Lamination verbunden wird.

14. Verfahren nach Anspruch 13, wobei die Isolierungslinien (5) durch Laserbearbeitung eingebracht werden.

15. Verwendung einer Seitenscheibe nach einem der Ansprüche 1 bis 12 in Fortbewegungsmitteln für den Verkehr auf dem Lande, in der Luft oder zu Wasser, insbesondere in Kraftfahrzeugen.

## Claims

1. Heatable laminated side pane, comprising at least an outer pane (1) and an inner pane (2), which are connected to each other via a thermoplastic intermediate layer (3), and a transparent electrically conductive coating (4) arranged in a planar manner between the outer pane (1) and the inner pane (2), which coating (4) is divided by isolation lines (5) into segments (6), wherein the line width of the isolation lines (5) is less than or equal to 500 µm, and wherein

- the coating (4) has heating strips (9) running between a first busbar (7) and a second busbar (8) and each containing at least one segment (6), wherein the heating strips (9) are electrically insulated from each other by the isolation lines (5),
- at least one heating strip (9) is formed by at least two segments (6), which are electrically conductively serially connected to each other via at least one electrically conductive connection element (10), and
- the length of each individual heating strip (9) deviates by at most 15% from the average length of the heating strips (9),

and wherein the connection elements (10) and the busbars (7,8) are formed as strips of an electrically conductive foil or as fired screen printing paste.

2. Side pane according to claim 1, wherein each heating strip (9) is formed by one or two segments (6) and wherein the number of segments (6) is preferably from 5 to 15.

3. Side pane according to claim 1 or 2, wherein the length of each individual heating strip (9) deviates by at most 10%, particularly preferably by at most 5% from the average length of the heating strips (9).

4. Side pane according to one of claims 1 through 3, wherein the width of the heating strips (9) is from 1 cm to 10 cm, preferably from 2 cm to 6 cm, and wherein preferably all heating strips (9) have the same width.

5. Side pane according to one of claims 1 through 4, wherein the regions of the segments (6) of a heating strip (9) provided for contacting with the connection element are arranged immediately adjacent each other.

6. Side pane according to one of claims 1 through 4, wherein an insulating film (14) is arranged between a connection element (10) and segments (6) to which the connection element (10) is not supposed to be connected, which film preferably contains a polyimide (PI) and/or polyisobutylene (PIB) and preferably has a thickness from 10 $\mu$m to 200 $\mu$m.

7. Side pane according to one of claims 1 through 6, wherein the line width of the isolation lines (5) is from 10 $\mu$m to 250 $\mu$m, preferably from 20 $\mu$m to 150 $\mu$m.

8. Side pane according to one of claims 1 through 7, wherein the electrically conductive film contains copper or the fired screen printing paste contains silver particles.

9. Side pane according to one of claims 1 through 8, wherein each connection element (10) has a width from 1 mm to 10 mm and wherein the length of the contact region between the connection element (10) and each of the segments (6) contacted by the connection element (10) is from 50% to 100%, preferably from 80% to 99% of the width of the segment (6).

10. Side pane according to one of claims 1 through 9, wherein the connection elements (10) and the busbars (7,8) are arranged along the lower edge (U) and/or the rear edge (H) of the pane and the distance from the lower edge (U) is less than 10 cm, preferably less than 5 cm and the distance from the rear edge (H) is less than 3 cm, preferably less than 1.5 cm.

11. Side pane according to one of claims 1 through 10, wherein the electrically conductive coating (4) is applied on the outer pane (1), on the inner pane (2), or on a carrier film (12) in the intermediate layer (3), and preferably includes at least one electrically conductive layer, which contains at least silver and has a thickness from 10 nm to 50 nm, preferably two or three electrically conductive layers.

12. Side pane according to one of claims 1 through 11, wherein the heating power $P_S$ is at least 250 W/m$^2$, preferably at least 300 W/m$^2$, particularly preferably at least 350 W/m$^2$.

13. Method for producing a heatable laminated side pane according to one of claims 1 through 12, comprising at least

> (a) Preparing of an outer pane (1), an inner pane (2), and an intermediate layer (3), wherein the outer pane (1), the inner pane (2), or a film of the intermediate layer (3) are provided with a transparent electrically conductive coating (4),
> (b) Introducing of isolation lines (5) into the electrically conductive coating (4), wherein the electrically conductive coating (4) is divided into strip-shaped segments (6),
> (c) a first busbar (7) and a second busbar (8) and electrically conductive connection elements (10) are brought into contact with the electrically conductive coating (4) such that heating strips (9) are formed running between the first busbar (7) and the second busbar (8) and each containing at least one segment (6), wherein the line width of the isolation lines (5) is less than or equal to 500 $\mu$m,
>
>> - the connection elements (10) and the busbars (7,8) are formed as strips of an electrically conductive foil or as fired screen printing paste,
>> - at least one heating strip is formed by at least two segments (6), which are electrically conductively serially connected to each other via at least one electrically conductive connection element (10), and
>> - the length of each individual heating strip (9) deviates by at most 10% from the average length of the heating strips (9), and
>
> (d) the outer pane (1) is bonded to the inner pane (2) via the intermediate layer (3) by lamination.

14. Method according to claim 13, wherein the isolation lines (5) are introduced by laser machining

15. Use of a side pane according to one of claims 1 through 12 in means of locomotion for travel on land, in the air, or on water, in particular in motor vehicles.

**Revendications**

1. Vitre latérale laminée chauffante, comprenant au moins une vitre extérieure (1) et une vitre intérieure (2), qui sont reliées l'une à l'autre par une couche intermédiaire thermoplastique (3), et un revêtement transparent électriquement conducteur (4) disposé de manière plane entre la vitre extérieure (1) et la vitre intérieure (2), lequel revêtement (4) est divisé par des lignes d'isolation (5) en segments (6), la largeur de ligne des lignes d'isolation (5) étant inférieure ou égale à 500 μm, et dans laquelle

   - le revêtement (4) présente des bandes chauffantes (9) s'étendant entre une première barre conductrice (7) et une deuxième barre conductrice (8) et contenant chacune au moins un segment (6), les bandes chauffantes (9) étant isolées électriquement les unes des autres par les lignes d'isolation (5),
   - au moins une bande chauffante (9) est formée par au moins deux segments (6), qui sont reliés en série de manière électriquement conductrice les uns aux autres par l'intermédiaire d'au moins un élément de connexion électriquement conducteur (10), et
   - la longueur de chaque bande chauffante individuelle (9) s'écarte d'au plus 15 % de la longueur moyenne des bandes chauffantes (9),

   et dans lequel les éléments de connexion (10) et les barres omnibus (7, 8) sont formés comme des bandes d'une feuille électriquement conductrice ou comme une pâte sérigraphique cuite.

2. Vitre latérale selon la revendication 1, dans laquelle chaque bande chauffante (9) est formée par un ou deux segments (6) et dans laquelle le nombre de segments (6) est de préférence de 5 à 15.

3. Vitre latérale selon la revendication 1 ou 2, dans laquelle la longueur de chaque bande chauffante individuelle (9) s'écarte d'au plus 10%, de manière particulièrement préférée d'au plus 5% de la longueur moyenne des bandes chauffantes (9).

4. Vitre latérale selon l'une des revendications 1 à 3, dans laquelle la largeur des bandes chauffantes (9) est comprise entre 1 cm et 10 cm, de préférence entre 2 cm et 6 cm, et dans laquelle de préférence toutes les bandes chauffantes (9) ont la même largeur.

5. Vitre latérale selon l'une des revendications 1 à 4, dans laquelle les zones des segments (6) d'une bande chauffante (9) prévues pour entrer en contact avec l'élément de connexion sont disposées de manière immédiatement adjacente les unes aux autres.

6. Vitre latérale selon l'une des revendications 1 à 4, dans laquelle un film isolant (14) est disposé entre un élément de connexion (10) et des segments (6) auxquels l'élément de connexion (10) n'est pas censé être connecté, lequel film contient de préférence un polyimide (PI) et/ou un polyisobutylène (PIB) et présente de préférence une épaisseur de 10 μm à 200 μm.

7. Vitre latérale selon l'une des revendications 1 à 6, dans laquelle la largeur de trait des lignes d'isolation (5) est comprise entre 10 μm et 250 μm, de préférence entre 20 μm et 150 μm.

8. Vitre latérale selon l'une des revendications 1 à 7, dans laquelle le film électriquement conducteur contient du cuivre ou la pâte sérigraphique cuite contient des particules d'argent.

9. Vitre latérale selon l'une des revendications 1 à 8, dans laquelle chaque élément de connexion (10) a une largeur comprise entre 1 mm et 10 mm et dans laquelle la longueur de la zone de contact entre l'élément de connexion (10) et chacun des segments (6) contactés par l'élément de connexion (10) est comprise entre 50% et 100%, de préférence entre 80% et 99% de la largeur du segment (6).

10. Vitre latérale selon l'une des revendications 1 à 9, dans laquelle les éléments de connexion (10) et les barres omnibus (7, 8) sont disposés le long du bord inférieur (U) et/ou du bord arrière (H) de la vitre et la distance au bord inférieur (U) est inférieure à 10 cm, de préférence inférieure à 5 cm et la distance au bord arrière (H) est inférieure à 3 cm, de préférence inférieure à 1,5 cm.

11. Vitre latérale selon l'une des revendications 1 à 10, dans laquelle le revêtement électriquement conducteur (4) est appliqué sur la vitre extérieure (1), sur la vitre intérieure (2), ou sur un film support (12) dans la couche intermédiaire (3), et comprend de préférence au moins une couche électriquement conductrice, qui contient au moins de l'argent et présente une épaisseur de 10 nm à 50 nm, de préférence deux ou trois couches électriquement conductrices.

**12.** Vitre latérale selon l'une des revendications 1 à 11, dans laquelle la puissance de chauffage $P_S$ est d'au moins 250 W/m$^2$, de préférence d'au moins 300 W/m$^2$, de manière particulièrement préférée d'au moins 350 W/m$^2$.

**13.** Procédé de fabrication d'une vitre latérale laminée chauffante selon l'une des revendications 1 à 12, comprenant au moins .

   (a) préparer d'une vitre extérieure (1), d'une vitre intérieure (2) et d'une couche intermédiaire (3), la vitre extérieure (1), la vitre intérieure (2) ou un film de la couche intermédiaire (3) étant pourvus d'un revêtement transparent conducteur d'électricité (4),
   (b) introduir de lignes d'isolation (5) dans le revêtement électriquement conducteur (4), dans lequel le revêtement électriquement conducteur (4) est divisé en segments en forme de bande (6),
   (c) mise en contact d'une première barre conductrice (7) et d'une deuxième barre conductrice (8) et d'éléments de connexion électriquement conducteurs (10) avec le revêtement électriquement conducteur (4) de manière à former des bandes chauffantes (9) s'étendant entre la première barre conductrice (7) et la deuxième barre conductrice (8) et contenant chacune au moins un segment (6), la largeur de ligne des lignes d'isolation (5) étant inférieure ou égale à 500 $\mu$m,

   - les éléments de connexion (10) et les barres conductrices (7, 8) sont formés comme des bandes d'une feuille électriquement conductrice ou comme une pâte sérigraphique cuite,
   - au moins une bande chauffante est formée par au moins deux segments (6), qui sont reliés en série de manière électriquement conductrice les uns aux autres par l'intermédiaire d'au moins un élément de connexion électriquement conducteur (10), et
   - la longueur de chaque bande chauffante individuelle (9) s'écarte d'au plus 10 % de la longueur moyenne des bandes chauffantes (9), et

   (d) la vitre extérieure (1) est reliée à la vitre intérieure (2) par la couche intermédiaire (3) par laminage.

**14.** Procédé selon la revendication 13, dans lequel les lignes d'isolation (5) sont introduites par usinage laser.

**15.** Utilisation d'une vitre latérale selon l'une des revendications 1 à 12 dans des moyens de locomotion pour des déplacements sur terre, dans les airs ou sur l'eau, notamment dans des véhicules automobiles.

Fig. 1

Fig. 2

Fig. 3

Fig. 4

Fig. 5

Fig. 6

Fig. 7

Bereitstellen einer Trägerfolie (14) mit einer leitfähigen Beschichtung (4)

↓

Aufteilen der Beschichtung (4) in streifenförmige Segmente (6) durch Isolierungslinien (5) mittels Laserbearbeitung

↓

Erzeugen von Heizstreifen (9) durch Kontaktieren der Segmente (6) mit einer ersten Stromsammelschiene (7) und einer zweiten Stromsammelschiene (8) und elektrisch leitfähigen Verbindungselementen (9)

↓

Übereinander Anordnen einer Außenscheibe (1), einer Zwischenschicht (3), die die Trägerfolie (14) enthält, und einer Innenscheibe (2)

↓

Verbinden der Außenscheibe (1) mit der Innenscheibe (2) über die Zwischenschicht (3) durch Lamination

Fig. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102004029164 A1
- WO 03105532 A1
- WO 03105533 A1
- WO 2006010698 A1
- US 2878357 A
- EP 2345303 B1
- WO 2012004280 A1